# FASCICULE DE BREVET EUROPEEN

(11) **EP 4 558 362 B1**
(45) Date de publication et mention de la délivrance du brevet: **10.06.2026**
(21) Numéro de dépôt: 23744160.5
(22) Date de dépôt: 18.07.2023
(51) Int. Cl.: B60R 19/54, B61F 19/00, F41H 5/013, F41H 5/16, E01F 13/02

(54) **DISPOSITIF DE CONTRÔLE DE FOULE DESTINÉ Á ÊTRE INSTALLÉ SUR UN VÉHICULE**
VORRICHTUNG ZUR KONTROLLE VON MENSCHENANSAMMLUNGEN ZUM EINBAU IN EIN FAHRZEUG
CROWD CONTROL DEVICE FOR INSTALLATION ON A VEHICLE

(30) Priorité: 18.07.2022 FR 2207305
(43) Date de publication de la demande: 28.05.2025
(73) Titulaire: KNDS France, 78034 Versailles Cedex (FR)
(72) Inventeur: JACQUEMONT, Jacky, 78034 Versailles Cedex (FR)
(74) Mandataire: Cabinet Célanie
(86) Numéro de dépôt international: PCT/EP2023/069864
(87) Numéro de publication internationale: WO 2024/017866

(56) Documents cités:
- CN-A- 113 606 997
- CN-U- 215 598 228
- DE-A1- 102020 006 875
- US-A1- 2020 393 216

## Description

### DOMAINE DE L'INVENTION

Le secteur technique de la présente invention concerne un dispositif contrôle de foule destiné à être monté sur un véhicule et plus particulièrement un dispositif de contrôle de foule apte à adopter une position déployée et une position de transport.

### ETAT DE LA TECHNIQUE

Les dispositifs de contrôle de foule sont habituellement utilisés depuis un véhicule équipé et permettent de contenir une masse ou une foule de personnes lors de manifestation par exemple ou sur des territoires en guerre. Ces dispositifs sont également utilisés pour repousser les éventuels obstacles que le véhicule peut rencontrer sur son passage.

Ce sont généralement des dispositifs volumineux qui limitent fortement la mobilité du véhicule sur lequel ils sont installés.

Il existe des camions, des tracteurs, ou des véhicules blindés équipés de grilles anti-foule ou de lame de déblaiement.

Le document CN 112212743 par exemple décrit un dispositif de contrôle de foule comprenant un moyen de poussée d'encombrants ainsi qu'une grille.

On connait également la solution décrite dans le document US 2020393216 qui présente un dispositif de contrôle de foule selon le préambule de la revendication 1 et comprenant une pluralité axes d'articulation.

La grille est fixée à l'avant d'un véhicule et déployable en largeur par des panneaux pivotants et coulissants. La grille comporte un socle dont le positionnement est ajusté verticalement par des vérins afin de poser la grille au sol.

Le dispositif décrit est particulièrement imposant et altère fortement la maniabilité du véhicule sur lequel il est installé.

L'objectif de la présente invention est de fournir un dispositif de contrôle de foule peu encombrant et n'altérant pas ou peu la mobilité et la maniabilité du véhicule sur lequel il est installé.

### RESUME DE L'INVENTION

L'invention concerne un dispositif de contrôle de foule destiné à être installé sur un véhicule et apte à adopter une position déployée et une position de transport, ledit dispositif comprenant :
- une grille,
- un support de grille,
- un premier moyen supérieur réglable en longueur apte à adopter une position repliée et une position dépliée et relié d'une part au support et, d'autre part, à la grille,
- un deuxième moyen inférieur réglable en longueur apte à adopter une position repliée et une position dépliée et relié d'une part au support et, d'autre part, à la grille, et
- une barre de soutien reliée d'une part au support et, d'autre part, à la grille, la barre de soutien, le premier moyen supérieur réglable en longueur et le deuxième moyen inférieur réglable en longueur étant montés pivotants respectivement autour d'un premier axe d'articulation horizontal du support, d'un deuxième axe d'articulation horizontal du support et d'un troisième axe d'articulation horizontal du support de sorte que :
   - lorsque le premier moyen supérieur réglable en longueur est en position repliée et que le deuxième moyen inférieur réglable en longueur est en position dépliée, le dispositif est en position de transport, et
   - lorsque le premier moyen supérieur réglable en longueur est en position dépliée et que le deuxième moyen inférieur réglable en longueur est en position repliée, le dispositif est en position déployée.

Selon un mode de réalisation de l'invention, le premier moyen supérieur réglable en longueur et le deuxième moyen inférieur réglable en longueur sont montés pivotants respectivement autour d'un quatrième axe d'articulation horizontal de la grille et d'un cinquième axe d'articulation horizontal de la grille.

Selon un autre mode de réalisation de l'invention, le dispositif comprend au moins un moyen de verrouillage dudit dispositif en position déployée ou en position de transport.

Selon encore un autre mode de réalisation de l'invention, la barre de soutien, le premier moyen supérieur réglable en longueur et le deuxième moyen inférieur réglable en longueur sont respectivement reliés à la grille par l'intermédiaire d'un premier moyen de renfort, d'un deuxième moyen de renfort et d'un troisième moyen de renfort de la grille.

Avantageusement, le troisième moyen de renfort est apte à augmenter la résistance à la déformation de la grille et comprend une portion centrale et deux portions latérales télescopiques.

Avantageusement encore, la grille comprend une partie centrale fixée sur les premier, deuxième et troisième moyens de renfort et deux parties latérales déployables montées pivotantes sur la partie centrale et destinées à venir en appui sur les portions latérales télescopiques du troisième moyen de renfort.

Selon encore un autre mode de réalisation de l'invention, le premier moyen supérieur réglable en longueur et le deuxième moyen inférieur réglable en longueur sont représentés par des bielles télescopiques, des ridoirs ou des vérins.

Avantageusement, les vérins sont des vérins électriques.

L'invention concerne également un véhicule équipé d'un dispositif de contrôle de foule selon l'invention.

Selon encore un autre mode de réalisation de l'invention, le véhicule comprend un treuil manuel ou électrique relié d'une part au dispositif et, d'autre part au véhicule, le treuil étant apte à permettre le passage du dispositif de la position déployée à la position de transport et de la position de transport à la position déployée.

Le principal avantage du dispositif selon l'invention réside dans la diminution de l'encombrement général du dispositif en position de transport.

Un autre avantage encore de la présente invention réside dans l'augmentation de la résistance à la déformation de la grille notamment au niveau de sa partie basse permettant ainsi le déblaiement d'encombrants.

Un autre avantage encore de la présente invention réside dans l'atténuation de l'encombrement supérieur du dispositif en position de transport permettant par exemple le tir de missiles depuis le véhicule.

Un autre avantage encore de la présente invention réside dans l'atténuation de l'encombrement inférieur du dispositif en position de transport permettant une meilleure maniabilité et mobilité du véhicule équipé du dispositif.

### BREVE DESCRIPTION DES DESSINS

D'autres caractéristiques, avantages et détails de l'invention seront mieux compris à la lecture du complément de description qui va suivre en rapport avec les dessins dans lesquels :
La figure 1 représente une vue de face du dispositif de contrôle de foule,
La figure 2 représente une vue de derrière du dispositif de contrôle de foule,
La figure 3 représente une vue de profil du dispositif de contrôle de foule en position déployée, et
La figure 4 représente une vue de profil du dispositif de contrôle de foule en position de transport.

### DESCRIPTION DETAILLEE DE MODES DE REALISATION DE L'INVENTION

Comme évoqué précédemment, l'invention concerne un dispositif de contrôle de foule comprenant :
- une grille,
- un support de grille,
- un premier moyen supérieur réglable en longueur apte à adopter une position repliée et une position dépliée et reliant le support à la grille,
- un deuxième moyen inférieur réglable en longueur apte à adopter une position repliée et une position dépliée et reliant le support à la grille, et
- une barre de soutien reliant le support de grille à la grille.

Le dispositif de contrôle de foule de l'invention est apte à adopter une position de transport et une position déployée.

Dans le cadre de la présente invention, on entend par position de transport la position du dispositif dans laquelle il n'exerce pas sa fonction de contrôle d'une foule mais favorise la mobilité du véhicule sur lequel il est disposé. La grille du dispositif est inclinée vers le véhicule, ce qui abaisse la limite haute et augmente la limite basse du dispositif. La position de transport permet en outre de réduire la hauteur du gabarit frontal du dispositif. Dans cette position de transport, le premier moyen supérieur réglable en longueur est en position repliée et le deuxième moyen inférieur réglable en longueur est en position dépliée.

Dans le cadre de la présente invention, on entend par position déployée la position du dispositif dans laquelle il exerce sa fonction de contrôle d'une foule. La grille du dispositif est disposée à la verticale et permet de bloquer l'accès à une route par exemple. Dans cette position déployée, le premier moyen supérieur réglable en longueur est en position dépliée et le deuxième moyen inférieur réglable en longueur est en position repliée.

La position repliée d'un moyen réglable en longueur correspond à la position du moyen réglable en longueur pour laquelle la longueur du moyen réglable en longueur est à son maximum dans le cadre de l'utilisation normale du dispositif.

La position dépliée d'un moyen réglable en longueur correspond à la position du moyen réglable en longueur pour laquelle la longueur du moyen réglable en longueur est à son minimum dans le cadre de l'utilisation normale du dispositif.

Dans le cadre de la présente invention, les termes « inférieur » et « supérieur » désignent la position relative d'éléments sur un axe vertical lors de l'utilisation normale du dispositif. Ainsi, lors de l'utilisation normale du dispositif, un élément « inférieur » est plus proche du sol qu'un élément « supérieur ».

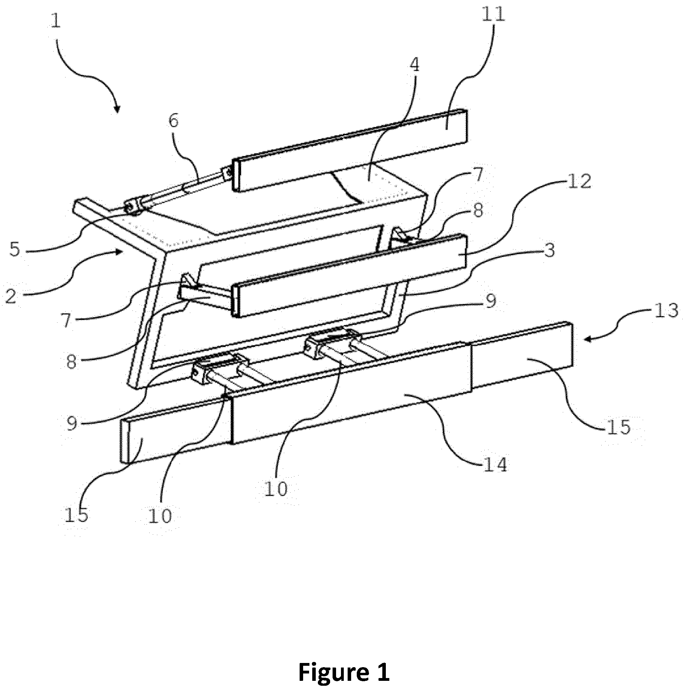

La figure 1 représente le dispositif de contrôle de foule 1 dont la grille n'est pas représentée.

Le dispositif 1 comprend un support 2 de grille ici représenté par un cadre destiné à être fixé sur la carrosserie du véhicule. Le support 2 comprend une face frontale 3 et une face supérieure 4 agencées de sorte à épouser la forme de la carrosserie du véhicule.

La face supérieure 4 comprend deux points d'attache 5 définissant le deuxième axe d'articulation horizontal 5 et sur lequel est monté pivotant le premier moyen supérieur 6 réglable en longueur. Le deuxième axe d'articulation horizontal 5 permet en outre de relier le premier moyen supérieur 6 réglable en longueur au support 2 tout en autorisant la rotation du premier moyen supérieur 6 réglable en longueur.

Dans ce mode de réalisation représenté, le premier moyen supérieur 6 réglable en longueur comprend deux bielles télescopiques chacune reliée au support 2 par l'intermédiaire du deuxième axe d'articulation horizontal 5. Cependant, l'invention n'est pas limitée à ce mode de réalisation et le premier moyen supérieur 6 réglable en longueur peut être représenté par une seule ou plusieurs bielles télescopiques, un ou plusieurs vérins, ou encore un ou plusieurs ridoirs.

De la même façon, la face frontale 3 comprend deux points d'attache supérieurs 7 définissant le premier axe d'articulation horizontal 7 et sur lequel est monté pivotant la barre de soutien 8. La face frontale 3 comprend également deux points d'attache inférieurs 9 définissant le troisième axe d'articulation horizontal 9 sur lequel est monté pivotant le deuxième moyen inférieur 10 réglable en longueur.

Le premier axe d'articulation horizontal 7 permet en outre de relier la barre de soutien 8 au support 2 tout en autorisant la rotation de la barre de soutien 8.

Le troisième axe d'articulation horizontal 9 permet en outre de relier le deuxième moyen inférieur 10 réglable en longueur au support 2 tout en autorisant la rotation du deuxième moyen inférieur 10 réglable en longueur.

Dans ce mode de réalisation représenté, le deuxième moyen inférieur 10 réglable en longueur comprend quatre bielles télescopiques chacune reliée au support par l'intermédiaire du troisième axe d'articulation horizontal 9. La présence de quatre bielles télescopiques permet en outre de renforcer la résistance de la partie basse du dispositif 1. Cependant, l'invention n'est pas limitée à ce mode de réalisation et le deuxième moyen inférieur 10 réglable en longueur peut être représenté par une seule ou plusieurs bielles télescopiques, un ou plusieurs vérins ou encore un ou plusieurs ridoirs.

Selon le mode de réalisation de l'invention représenté sur la figure 1, le dispositif 1 comprend également un premier moyen de renfort 12 relié à la barre de soutien 8, un deuxième moyen de renfort 11 relié au premier moyen supérieur 6 réglable en longueur et un troisième moyen de renfort 13 relié au deuxième moyen inférieur 10 réglable en longueur. La grille (non représentée sur la figure 1) du dispositif 1 est alors reliée à la barre de soutien 8, au premier moyen supérieur 6 réglable en longueur et au deuxième moyen inférieur 10 réglable en longueur par l'intermédiaire des moyens de renfort 11, 12 et 13.

Les moyens de renfort 11, 12 et 13 permettent en outre d'améliorer la résistance à la déformation de la grille 16.

Le troisième moyen de renfort 13 est constitué d'une partie centrale 14 et de deux parties latérales télescopiques 15 dont la fonction sera explicitée ci-après.

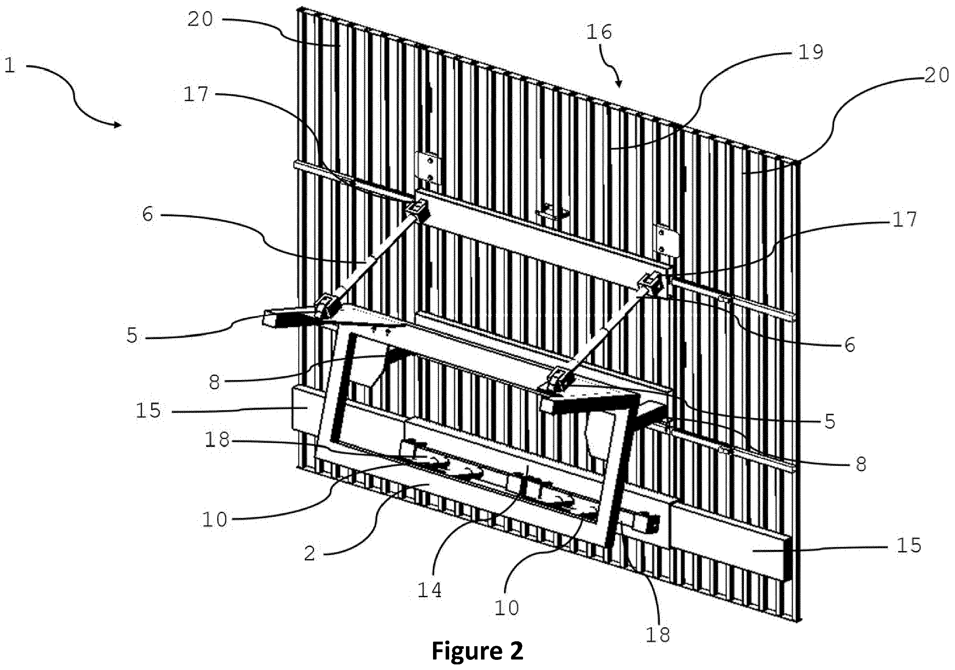

La figure 2 représente le dispositif de contrôle de foule 1 vue de derrière et sur laquelle la grille 16 est représentée.

On distingue le support 2 de la grille 16, le premier moyen supérieur 6 réglable en longueur monté pivotant autour du deuxième axe d'articulation 5 du support 2, la barre de soutien 8 et le deuxième moyen inférieur 10 réglable en longueur.

Dans ce mode de réalisation, la grille 16 est respectivement reliée au premier moyen supérieur 6 réglable en longueur, à la barre de soutien 8 et au deuxième moyen inférieur 10 réglable en longueur par l'intermédiaire du deuxième moyen de renfort 11, du premier moyen de renfort 12 et du troisième moyen de renfort 13.

La grille 16 est alors fixée sur les moyens de renfort 11, 12 et 13 qui viennent renforcer sa résistance à la déformation. La grille 16 comprend une partie centrale 19 reliée au premier moyen supérieur 6 réglable en longueur, à la barre de soutien 8 et au deuxième moyen inférieur 10 réglable en longueur par l'intermédiaire des moyens de renforts 11, 12 et 13. La grille 16 comprend également deux parties latérales déployables 20 montées pivotantes de part et d'autre de la partie centrale 19.

Ainsi, le déploiement des parties latérales 20 permet d'augmenter la largeur de grille 16 et le reploiement ou de la limiter à la largeur de la partie centrale 19.

Lorsque les parties latérales 20 sont déployées, les parties latérales télescopiques 15 du troisième moyen de renfort 13 sont également déployées, ce qui permet de renforcer la résistance à la déformation des parties latérales 20 de la grille 16. A l'inverse, le non déploiement des parties latérales 20 de la grille 16 ainsi que celui des parties latérales télescopiques 15 du troisième moyen de renfort 13 permet de limiter l'encombrement du dispositif 1.

Il est possible de réaliser le dispositif de contrôle de foule 1 sans les moyens de renfort 11, 12 et 13. Le premier moyen supérieur 6 réglable en longueur, la barre de soutien 8 et le deuxième moyen inférieur 10 réglable en longueur sont alors directement reliés à la grille 16.

Le premier moyen supérieur 6 réglable en longueur et le deuxième moyen inférieur 10 réglable en longueur sont respectivement montés pivotants autour d'un quatrième axe d'articulation horizontal 17 de la grille 16 et d'un cinquième axe d'articulation horizontal 18 de la grille 16, tandis que la barre de soutien 8 est reliée de manière fixe à la grille 16. Cette conception particulière du dispositif 1 permet en outre à la grille 16 de pivoter autour du premier axe d'articulation horizontal 7.

Le quatrième axe d'articulation horizontal 17 est par exemple représenté par deux points d'attache 17 situés sur le deuxième moyen de renfort 11 comme représenté sur la figure 2. Cependant, dans le cas où le premier moyen supérieur 6 réglable en longueur comprend une seule bielle, ridoir ou vérin, le quatrième axe d'articulation horizontal 17 est représenté par un seul point d'attache.

Le cinquième axe d'articulation horizontal 18 est par exemple représenté par deux points d'attache 18 situés sur le troisième moyen de renfort 13 comme représenté sur la figure 2. Cependant, dans le cas où le deuxième moyen inférieur 10 réglable en longueur comprend une seule bielle, ridoir ou vérin, le cinquième axe d'articulation horizontal 18 est représenté par un seul point d'attache.

De manière générale, tous les axes d'articulation horizontaux 5, 7, 9, 17 et 18 sont représentés par autant de points d"attaches nécessaires à la liaison en pivot des premier 6 et deuxième 10 moyens réglables en longueur.

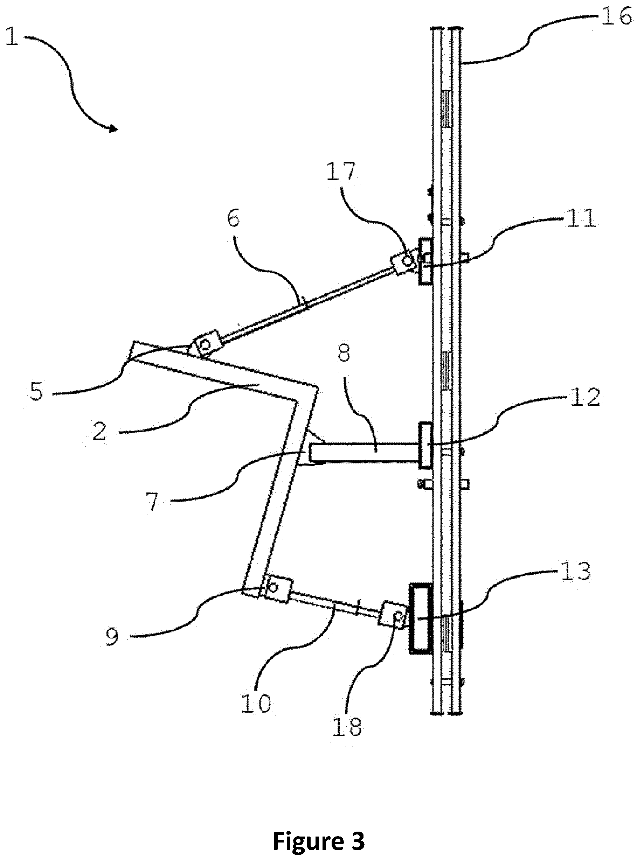

La figure 3 représente une vue de profil du dispositif de contrôle de foule 1 en position déployée. On remarque que les axes d'articulations horizontaux 5, 7, 9, 17 et 18 sont tous parallèles entre eux.

Leur agencement fait que la grille 16 est apte à pivoter autour du premier axe d'articulation horizontal 7. En effet, le premier axe d'articulation horizontal 7 se trouve, sur un axe vertical, entre le deuxième axe d'articulation horizontal 5 et le troisième axe d'articulation horizontal 9. Ainsi, l'élongation ou le raccourcissement du deuxième moyen inférieur 10 réglable en longueur respectivement couplé au raccourcissement ou à l'élongation du premier moyen supérieur 6 réglable en longueur permet à la grille de pivoter autour du premier axe d'articulation 7.

Le quatrième axe d'articulation horizontal 17 et le cinquième axe d'articulation horizontal 18 se trouvent quant à eux dans un même plan vertical délimité par la grille 16.

En position déployée, la barre de soutien 8 se trouve sensiblement à l'horizontal de façon à optimiser la résistance mécanique du dispositif 1.

Dans cette position déployée, le premier moyen supérieur 6 réglable en longueur est en position dépliée et le deuxième moyen inférieur 10 réglable en longueur est en position repliée. La grille 16 se retrouve alors sensiblement à la verticale et le dispositif de contrôle de foule 1 permet de bloquer l'accès à une route par exemple. Il permet également, de par la présence du troisième moyen de renfort 13 et de la grille 16, de déblayer des encombrants pouvant obstruer le passage d'un véhicule équipé du dispositif 1.

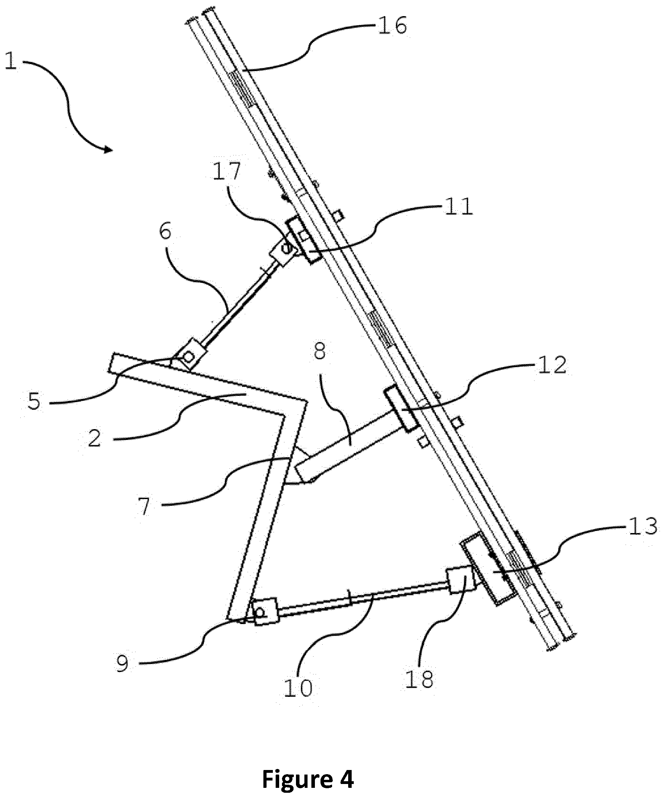

La figure 4 représente une vue de profil du dispositif de contrôle de foule 1 en position de transport.

L'élongation du deuxième moyen inférieur 10 réglable en longueur couplé au raccourcissement du premier moyen supérieur 6 réglable en longueur permet le passage de la position déployée à la position de transport. Le premier moyen supérieur 6 réglable en longueur, la barre de soutien 8 et le deuxième moyen inférieur 10 réglable en longueur pivotent respectivement autour du deuxième axe d'articulation horizontal 5, du premier axe d'articulation horizontal 7 et du deuxième axe d'articulation horizontal 9 ce qui permet d'incliner la grille 16.

Le premier moyen supérieur 6 réglable en longueur est alors en position repliée et le deuxième moyen inférieur 10 réglable en longueur est en position dépliée.

Dans cette position de transport, la grille 16 forme un angle par rapport à l'axe vertical défini par la grille 16 lorsque le dispositif 1 est position déployée. Lorsque le dispositif 1 est installé sur un véhicule, par exemple à l'avant du véhicule, la grille 16 est alors inclinée vers le capot du véhicule.

L'encombrement général d'un véhicule équipé du dispositif 1 en position de transport est alors réduit. En effet, la limite haute du dispositif 1 est abaissée, ce qui permet par exemple de dégager la vue pour le conducteur du véhicule ou encore d'avoir l'angle nécessaire pour effectuer des tirs de missiles. La limite basse du dispositif 1 est quant à elle augmentée et le dispositif 1 ne gène plus la mobilité du véhicule pour monter sur des obstacles par exemple. Cette mobilité retrouvée du véhicule lorsque le dispositif 1 est en position de transport est obtenue sans déséquiper le véhicule du dispositif 1.

Le passage de la position déployée à la position de transport, et inversement, peut être réalisée au moyen d'un treuil manuel ou mécanique agencé de sorte à induire l'élongation et le raccourcissement du premier moyen supérieur 6 réglable en longueur et/ou du deuxième moyen inférieur 10 réglable en longueur.

Le treuil peut être relié d'une part au dispositif 1, par exemple à la grille 16, et d'autre part, au véhicule sur lequel le dispositif est installé.

Le passage de la position déployée à la position de transport, et inversement, peut également être réalisé au moyen de vérins électriques représentant le premier moyen supérieur 6 réglable en longueur et/ou le deuxième moyen inférieur 10 réglable en longueur.

Enfin, le dispositif 1 selon l'invention peut comprendre un ou plusieurs moyens de verrouillage du dispositif en position déployé et de transport. Le ou les moyens de verrouillage peuvent par exemple comprendre des goupilles insérées dans le premier 6 et/ou le deuxième 10 moyen réglable en longueur de façon à interdire l'élongation et le raccourcissement du premier moyen supérieur 6 réglable en longueur et/ou deuxième moyen inférieur 10 réglable en longueur. Le moyen de verrouillage peut également comprendre des butées directement insérées dans le premier moyen supérieur 6 réglable en longueur et/ou le deuxième moyen inférieur 10 réglable en longueur.

On notera que le support 2 de grille 16 peut être un cadre comprenant des points d'attache pour les moyens réglables en longueur 6 et 10 et pour la barre de soutien 8 comme représenté sur les figures ou il peut directement être représenté par la carrosserie du véhicule qui comprend alors des points d'attache pour les moyens réglables en longueur 6 et 10 et la barre de soutien 8.

Le dispositif 1 est destiné à être équipé à l'avant d'un véhicule et à être déployé dans des zones nécessitant le contrôle de masse ou foule de personnes.

## Revendications

1. Dispositif de contrôle de foule (1) destiné à être installé sur un véhicule et apte à adopter une position déployée et une position de transport, ledit dispositif (1) comprenant :
- une grille (16),
- un support (2) de grille (16),
- un premier moyen supérieur (6) réglable en longueur apte à adopter une position repliée et une position dépliée et relié d'une part au support (2) et, d'autre part, à la grille (16),
- un deuxième moyen inférieur (10) réglable en longueur apte à adopter une position repliée et une position dépliée et relié d'une part au support (2) et, d'autre part, à la grille (16), et
- une barre de soutien (8) reliée d'une part au support (2) et, d'autre part, à la grille (16),
**caractérisé en ce que** la barre de soutien (8), le premier moyen supérieur (6) réglable en longueur et le deuxième moyen inférieur (10) réglable en longueur sont montés pivotants respectivement autour d'un premier axe d'articulation horizontal (7) du support (2), d'un deuxième axe d'articulation horizontal (5) du support (2) et d'un troisième axe d'articulation horizontal (9) du support (2) de sorte que :
- lorsque le premier moyen supérieur (6) réglable en longueur est en position repliée et que le deuxième moyen inférieur (10) réglable en longueur est en position dépliée, le dispositif (1) est en position de transport, et
- lorsque le premier moyen supérieur (6) réglable en longueur est en position dépliée et que le deuxième moyen inférieur (10) réglable en longueur est en position repliée, le dispositif (1) est en position déployée.

2. Dispositif de contrôle de foule (1) selon la revendication 1, **caractérisé en ce que** le premier moyen supérieur (6) réglable en longueur et le deuxième moyen inférieur (10) réglable en longueur sont montés pivotants respectivement autour d'un quatrième axe d'articulation horizontal (17) de la grille (16) et d'un cinquième axe d'articulation horizontal (18) de la grille (16).

3. Dispositif de contrôle de foule (1) selon la revendication 1 ou 2, **caractérisé en ce qu'**il comprend au moins un moyen de verrouillage dudit dispositif (1) en position déployée ou en position de transport.

4. Dispositif de contrôle de foule (1) selon l'une quelconque des revendications précédentes, **caractérisé en ce que** la barre de soutien (8), le premier moyen supérieur (6) réglable en longueur et le deuxième moyen inférieur (10) réglable en longueur sont respectivement reliés à la grille (16) par l'intermédiaire d'un premier moyen de renfort (12), d'un deuxième moyen de renfort (11) et d'un troisième moyen de renfort (13) de la grille (16).

5. Dispositif de contrôle de foule (1) selon la revendication 4, **caractérisé en ce que** le troisième moyen de renfort (13) est apte à augmenter la résistance à la déformation de la grille (16) et comprend une portion centrale (14) et deux portions latérales télescopiques (15).

6. Dispositif de contrôle de foule (1) selon la revendication 5, **caractérisé en ce que** la grille (16) comprend une partie centrale (19) fixée sur les premier (12), deuxième (11) et troisième (13) moyens de renfort et deux parties latérales déployables (20) montées pivotantes sur la partie centrale (19) et destinées à venir en appui sur les portions latérales télescopiques (15) du troisième moyen de renfort (13).

7. Dispositif de contrôle de foule (1) selon l'une quelconque des revendications précédentes, **caractérisé en ce que** le premier moyen supérieur (6) réglable en longueur et le deuxième moyen inférieur (10) réglable en longueur sont représentés par des bielles télescopiques, des ridoirs ou des vérins.

8. Dispositif de contrôle de foule (1) selon la revendication 7, **caractérisé en ce que** les vérins sont des vérins électriques.

9. Véhicule équipé d'un dispositif de contrôle de foule (1) selon l'une quelconque des revendications précédentes.

10. Véhicule selon la revendication 9, **caractérisé en ce qu'**il comprend un treuil manuel ou électrique relié d'une part au dispositif (1) et, d'autre part, au véhicule, le treuil étant apte à permettre le passage du dispositif (1) de la position déployée à la position de transport et de la position de transport à la position déployée.

## Patentansprüche

1. Vorrichtung (1) zur Kontrolle von Menschenansammlungen, die dazu bestimmt ist, an einem Fahrzeug eingerichtet zu werden, und dazu geeignet ist, eine ausgezogene Position und eine Transportposition einzunehmen, wobei die Vorrichtung (1) umfasst:
- ein Gitter (16),
- eine Halterung (2) für das Gitter (16),
- ein erstes, oberes Mittel (6), das in der Länge verstellbar ist und dazu geeignet ist, eine eingefahrene Position und eine ausgefahrene Position einzunehmen, und einerseits mit der Halterung (2) und andererseits mit dem Gitter (16) verbunden ist,
- ein zweites, unteres Mittel (10), das in der Länge verstellbar ist und dazu geeignet ist, eine eingefahrene Position und eine ausgefahrene Position einzunehmen, und einerseits mit der Halterung (2) und andererseits mit dem Gitter (16) verbunden ist, und
- eine Stützstange (8), die einerseits mit der Halterung (2) und andererseits mit dem Gitter (16) verbunden ist,
**dadurch gekennzeichnet, dass** die Stützstange (8), das erste, obere Mittel (6), das in der Länge verstellbar ist, und das zweite, untere Mittel (10), das in der Länge verstellbar ist, derart um eine erste horizontale Gelenkachse (7) der Halterung (2), um eine zweite horizontale Gelenkachse (5) der Halterung (2) beziehungsweise um eine dritte horizontale Gelenkachse (9) der Halterung (2) schwenkbar gelagert sind, dass:
- wenn das erste, obere Mittel (6), das in der Länge verstellbar ist, sich in der eingefahrenen Position befindet, und das zweite, untere Mittel (10), das in der Länge verstellbar ist, sich in der ausgefahrenen Position befindet, die Vorrichtung (1) sich in der Transportposition befindet, und
- wenn das erste, obere Mittel (6), das in der Länge verstellbar ist, sich in der ausgefahrenen Position befindet, und das zweite, untere Mittel (10), das in der Länge verstellbar ist, sich in der eingefahrenen Position befindet, die Vorrichtung (1) sich in der ausgezogenen Position befindet.

2. Vorrichtung (1) zur Kontrolle von Menschenansammlungen nach Anspruch 1, **dadurch gekennzeichnet, dass** das erste, obere Mittel (6), das in der Länge verstellbar ist, und das zweite, untere Mittel (10), das in der Länge verstellbar ist, um eine vierte horizontale Gelenkachse (17) des Gitters (16) beziehungsweise um eine fünfte horizontale Gelenkachse (18) des Gitters (16) schwenkbar gelagert sind.

3. Vorrichtung (1) zur Kontrolle von Menschenansammlungen nach Anspruch 1 oder 2, **dadurch gekennzeichnet, dass** sie mindestens ein Mittel zur Verriegelung der Vorrichtung (1) in der ausgezogenen Position oder in der Transportposition umfasst.

4. Vorrichtung (1) zur Kontrolle von Menschenansammlungen nach einem der vorhergehenden Ansprüche, **dadurch gekennzeichnet, dass** die Stützstange (8), das erste, obere Mittel (6), das in der Länge verstellbar ist, und das zweite, untere Mittel (10), das in der Länge verstellbar ist, über ein erstes Verstärkungsmittel (12), ein zweites Verstärkungsmittel (11) beziehungsweise ein drittes Verstärkungsmittel (13) des Gitters (16) mit dem Gitter (16) verbunden sind.

5. Vorrichtung (1) zur Kontrolle von Menschenansammlungen nach Anspruch 4, **dadurch gekennzeichnet, dass** das dritte Verstärkungsmittel (13) dazu geeignet ist, den Verformungswiderstand des Gitters (16) zu erhöhen, und einen mittleren Abschnitt (14) und zwei seitliche Teleskopabschnitte (15) umfasst.

6. Vorrichtung (1) zur Kontrolle von Menschenansammlungen nach Anspruch 5, **dadurch gekennzeichnet, dass** das Gitter (16) einen mittleren Teil (19), der an dem ersten (12), dem zweiten (11) und dem dritten (13) Verstärkungsmittel befestigt ist, und zwei ausziehbare Seitenteile (20) umfasst, die an dem mittleren Teil (19) schwenkbar gelagert sind und dazu bestimmt sind, auf den seitlichen Teleskopabschnitten (15) des dritten Verstärkungsmittels (13) in Auflage zu gelangen.

7. Vorrichtung (1) zur Kontrolle von Menschenansammlungen nach einem der vorhergehenden Ansprüche, **dadurch gekennzeichnet, dass** das erste, obere Mittel (6), das in der Länge verstellbar ist, und das zweite, untere Mittel (10), das in der Länge verstellbar ist, aus Teleskopschubstangen, Spannschrauben oder Zylindern bestehen.

8. Vorrichtung (1) zur Kontrolle von Menschenansammlungen nach Anspruch 7, **dadurch gekennzeichnet, dass** die Zylinder elektrische Zylinder sind.

9. Fahrzeug, das mit einer Vorrichtung (1) zur Kontrolle von Menschenansammlungen nach einem der vorhergehenden Ansprüche ausgerüstet ist.

10. Fahrzeug nach Anspruch 9, **dadurch gekennzeichnet, dass** es eine manuelle oder elektrische Winde umfasst, die einerseits mit der Vorrichtung (1) und andererseits mit dem Fahrzeug verbunden ist, wobei die Winde dazu geeignet ist, den Übergang der Vorrichtung (1) von der ausgezogenen Position zur Transportposition und von der Transportposition zur ausgezogenen Position zu ermöglichen.

## Claims

1. A crowd control device (1) intended to be installed on a vehicle and able to assume a deployed position and a transport position, said device (1) comprising:
- a grid (16),
- a support (2) for the grid (16),
- a first length-adjustable upper means (6) able to assume a folded position and an unfolded position and connected on the one hand to the support (2) and on the other hand to the grid (16),
- a second length-adjustable lower means (10) able to assume a folded position and an unfolded position and connected on the one hand to the support (2) and on the other hand to the grid (16), and
- a supporting bar (8) connected on the one hand to the support (2) and on the other hand to the grid (16),
**characterized in that** the supporting bar (8), the first length-adjustable upper means (6) and the second length-adjustable lower means (10) are pivotally mounted respectively about a first horizontal articulation axis (7) of the support (2), a second horizontal articulation axis (5) of the support (2) and a third horizontal articulation axis (9) of the support (2) such that:
- when the first length-adjustable upper means (6) is in the folded position and when the second length-adjustable lower means (10) is in the unfolded position, the device (1) is in the transport position, and
- when the first length-adjustable upper means (6) is in the unfolded position and when the second length-adjustable lower means (10) is in the folded position, the device (1) is in the deployed position.

2. The crowd control device (1) according to claim 1, **characterized in that** the first length-adjustable upper means (6) and the second length-adjustable lower means (10) are mounted pivotally respectively about a fourth horizontal articulation axis (17) of the grid (16) and a fifth horizontal articulation axis (18) of the grid (16).

3. The crowd control device (1) according to claim 1 or 2, **characterized in that** it comprises at least one means for locking said device (1) in the deployed position or in the transport position.

4. The crowd control device (1) according to any one of the preceding claims, **characterized in that** the supporting bar (8), the first length-adjustable upper means (6) and the second length-adjustable lower means (10) are respectively connected to the grid (16) by means of a first reinforcement means (12), of a second reinforcement means (11) and of a third reinforcement means (13) of the grid (16).

5. The crowd control device (1) according to claim 4, **characterized in that** the third reinforcement means (13) is able to increase the resistance to deformation of the grid (16) and comprises a central portion (14) and two telescopic lateral portions (15).

6. The crowd control device (1) according to claim 5, **characterized in that** the grid (16) comprises a central part (19) fixed on the first (12), second (11) and third (13) reinforcement means and two deployable lateral parts (20) pivotally mounted on the central part (19) and intended to bear on the telescopic lateral portions (15) of the third reinforcement means (13).

7. The crowd control device (1) according to any one of the preceding claims, **characterized in that** the first length-adjustable upper means (6) and the second length-adjustable lower means (10) are represented by telescopic connecting rods, turnbuckles or jacks.

8. The crowd control device (1) according to claim 7, **characterized in that** the jacks are electric jacks.

9. A vehicle equipped with a crowd control device (1) according to any one of the preceding claims.

10. The vehicle according to claim 9, **characterized in that** it comprises a manual or electric winch connected on the one hand to the device (1) and on the other hand to the vehicle, the winch being able to allow the device (1) to switch from the deployed position to the transport position and from the transport position to the deployed position.
